# EUROPEAN PATENT APPLICATION

(11) **EP 4 733 615 A1**
(43) Date of publication of application: **29.04.2026**
(21) Application number: 24825554.9
(22) Date of filing: 12.04.2024
(51) Int. Cl.: F16C 33/58, F16C 19/06, F16C 35/077

(54) **INSULATING BEARING**

(30) Priority: 23.06.2023 JP 2023103604
(71) Applicant: NSK LTD., Tokyo 141-8560 (JP)
(72) Inventor: YAMANAKA Hiroaki, Fujisawa-shi, Kanagawa 251-8501 (JP); ISHIBASHI Yutaka, Fujisawa-shi, Kanagawa 251-8501 (JP); ONO Junji, Fujisawa-shi, Kanagawa 251-8501 (JP)
(74) Representative: Grünecker Patent- und Rechtsanwälte PartG mbB
(86) International application number: PCT/JP2024/014899
(87) International publication number: WO 2024/262144

(57) **Abstract**

In this insulating bearing, a mill scale surface is formed on at least a part of a contact surface of a bearing ring on which a resin layer is formed, the contact surface being in contact with the resin layer. Alternatively, instead of the mill scale surface, the surface roughness in the circumferential direction is roughened to Ra 3.2 µm or more or Sa 3.2 µm or more. As a result, the relative sliding between an outer ring and inner ring and an insulating film in the insulating bearing coated with the insulating film and the damage between the two surfaces due to the relative sliding can be prevented, and the deterioration of bearing accuracy and the occurrence of electrolytic corrosion can be suppressed for a longer period of time.

## Description

### TECHNICAL FIELD

The present invention relates to an insulated bearing to be installed on a rotary shaft of a motor, a generator, and the like, and is particularly suitable to be installed on a portion through which a current may flow.

### BACKGROUND ART

In a device including a rotary body in the related art, a metal bearing is installed on a rotary shaft to reduce frictional resistance generated by rotation of the rotary body. For example, in a motor that rotates a rotary body (so-called rotor) by an electromagnetic force or a generator that generates power by rotating a rotary body (so-called turbine) by hydraulic power or the like, a bearing is also installed on a rotary shaft of a rotary body.

In the motor, generator, and the like, a current may easily leak into the bearing, and corrosion (hereinafter, referred to as "electrolytic corrosion") caused by current flowing may easily progress. Therefore, various techniques for preventing electrolytic corrosion of the bearing have been studied.

For example, Patent Literature 1 discloses an anti-electrolytic corrosion rolling bearing including an insulating coating that contains fibers oriented in an axial direction on a surface of an outer ring or an inner ring. Patent Literature 2 discloses a rolling bearing including a conductive shield and an insulating coating.

### CITATION LIST

### PATENT LITERATURE

Patent Literature 1: WO2021-220613
Patent Literature 2: US9581203

### SUMMARY OF INVENTION

### TECHNICAL PROBLEM

However, in an insulated bearing having a configuration in which an outer ring or an inner ring is coated with an insulating coating such as in Patent Literatures 1 and 2, no mechanical restraining force in a circumferential direction of the outer ring or the inner ring is generated on the insulating coating, and the insulating coating is held by the outer ring or the inner ring only by a frictional force, and therefore, when the insulated bearing rotates under a heavy load, particularly under a heavy radial load, relative sliding between the outer ring or the inner ring and the insulating coating may occur. When a significant relative sliding occurs, bearing accuracy may deteriorate due to uneven wear or the like caused by sliding at a specific portion between the outer ring or the inner ring and the insulating coating, and further, gear tooth contact, noise, and vibration performance may deteriorate in a member to which the insulated bearing is applied.

The present invention is made in view of the above problems, and an object of the present invention is to provide an insulated bearing that can prevent relative sliding between an outer ring or an inner ring and an insulating coating in the insulated bearing coated with the insulating coating and damage between two surfaces due to the relative sliding, and restrict deterioration of bearing accuracy and electrolytic corrosion for a relatively long period of time.

### SOLUTION TO PROBLEM

As a result of intensive studies to solve the above problems, the present inventors found that relative sliding between the outer ring or the inner ring and the resin layer can be prevented by roughening a part of the outer ring or the inner ring that is in contact with the resin layer, which is an insulating coating, and specifying circularity or coaxiality of the outer ring or the inner ring, and completed the present invention.

The insulated bearing according to the present invention has a following configuration [1].
[1] An insulated bearing including:
   a pair of bearing rings having a pair of raceway surfaces;
   a plurality of rolling elements rollably held between the pair of raceway surfaces; and
   a cage rollably holding the rolling elements, in which
   a contact surface of one of the bearing rings with a mating member is coated with a resin layer, and
   a black surface is formed on at least a part of a contact surface of the bearing ring, on which the resin layer is coated, with the resin layer.
   Preferred embodiments of the present invention related to the insulated bearing relate to following [2] and [3].
[2] In the insulated bearing according to [1], a circumferential part of at least the part of the contact surface of the bearing ring, on which the resin layer is formed, with the resin layer has circularity of 30 µm or more.
[3] In the insulated bearing according to [1] or [2], a circumferential part of at least two surfaces or more of the contact surface of the bearing ring, on which the resin layer is formed, with the resin layer has coaxiality of 20 µm or more.
   Further, the insulated bearing according to the present invention has a following configuration [4].
[4] An insulated bearing including:
   a pair of bearing rings having a pair of raceway surfaces;
   a plurality of rolling elements rollably held between the pair of raceway surfaces; and
   a cage rollably holding the rolling elements, in which
   a contact surface of one of the bearing rings with a mating member is coated with a resin layer, and
   at least a part of a contact surface of the bearing ring, on which the resin layer is formed, with the resin layer has a circumferential surface roughness of Ra 3.2 µm or more or Sa 3.2 µm or more.

### ADVANTAGEOUS EFFECTS OF INVENTION

In the insulated bearing of the present invention, by roughening a part of the outer ring or the inner ring which is in contact with the resin layer and specifying circularity or coaxiality of the outer ring or the inner ring, it is possible to prevent relative sliding between the outer ring or the inner ring and the resin layer and damage between the two surfaces due to the relative sliding, and it is possible to restrict deterioration of bearing accuracy and electrolytic corrosion for a relatively long period of time.

### BRIEF DESCRIPTION OF DRAWINGS

FIG. 1 is an axial cross-sectional view illustrating an example of an insulated bearing of the present invention.
FIG. 2 is a partially cutaway perspective view of the insulated bearing formed with a black surface on an outer ring.
FIGS. 3A and 3B illustrate Embodiment 1, FIG. 3A is an axial cross-sectional view, and FIG. 3B is a cross-sectional view taken along a line III-III in FIG. 3A.
FIGS. 4A and 4B illustrate Embodiment 2, FIG. 4A is an axial cross-sectional view, and FIG. 4B is a cross-sectional view taken along a line IV-IV in FIG. 4A.
FIGS. 5A and 5B illustrate Embodiment 3, FIG. 5A is an axial cross-sectional view, and FIG. 5B is a cross-sectional view taken along a line V-V in FIG. 5A.
FIGS. 6A and 6B illustrate Embodiment 4, FIG. 6A is an axial cross-sectional view, and FIG. 6B is a cross-sectional view taken along a line VI-VI in FIG. 6A.
FIG. 7 is a partially cutaway perspective view illustrating Embodiment 5.
FIG. 8 is a cross-sectional view at a boundary between an outer peripheral surface and a main chamfer of the outer ring in Embodiment 5.
FIG. 9 is a partially cutaway perspective view illustrating Embodiment 6.
FIG. 10 is a cross-sectional view at a boundary between the outer peripheral surface and a groove of the outer ring in Embodiment 6.
FIG. 11 is a partially cutaway perspective view illustrating an example of the insulated bearing in which a part in contact with a resin layer is roughened.
FIGS. 12A to 12C are cross-sectional views illustrating formation modes of the resin layer.
FIGS. 13A and 13B are cross-sectional views illustrating other examples of the formation mode of the resin layer.

### DESCRIPTION OF EMBODIMENTS

Hereinafter, embodiments of the present invention will be described in detail. The present invention is not limited to the embodiments described below.

### Embodiment 1

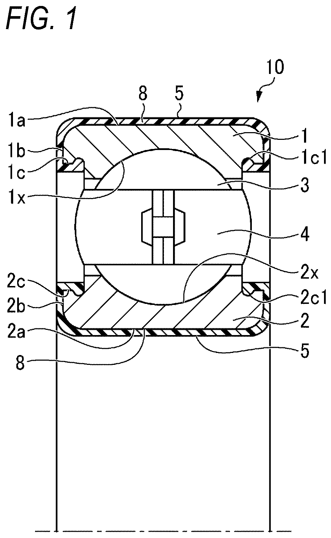

FIG. 1 is an axial cross-sectional view illustrating an example of an insulated bearing of the present invention. As illustrated in the drawing, an insulated bearing 10 includes an outer ring 1 that is one bearing ring and an inner ring 2 that is another bearing ring, which are concentrically arranged, balls 3 that are a plurality of rolling elements rollably held between a raceway groove (raceway surface) 1x of the outer ring 1 and a raceway groove (raceway surface) 2x of the inner ring 2, and a cage 4 rollably holding the balls 3. The balls 3 are held by the cage 4 at equal intervals in a circumferential direction.

A resin layer 5 is continuously formed to cover an outer peripheral surface 1a of the outer ring 1, two axial side surfaces 1b continuous from the outer peripheral surface 1a, and inner peripheral surfaces 1c directed inward from inner diameter side end portions of the two axial side surfaces 1b. The inner peripheral surface 1c of the outer ring 1 is formed with an annular groove 1c1 along a circumference, and an end portion of the resin layer 5 is fitted into the annular groove 1c1.

The resin layer 5 is also formed on an inner peripheral surface 2a of the inner ring 2, two axial side surfaces 2b continuous from the inner peripheral surface 2a, and outer peripheral surfaces 2c directed inward from outer diameter side end portions of the two axial side surfaces 2b. An end portion of the resin layer 5 is fitted into an annular groove 2c1 formed in the outer peripheral surface 2c.

A resin constituting the resin layer 5 is not limited, and a resin having heat resistance, durability (mechanical strength), and the like in addition to insulation is preferable, and for example, polyphenylene sulfide, polyphthalamide, polyphenylene ether, polyether ether ketone, fluororesin, and polyamide can be suitably used.

The resin layer 5 preferably has a film thickness of 50 µm or more, and more preferably 100 µm or more to ensure insulation. On the other hand, an upper limit of the film thickness of the resin layer 5 is preferably 2 mm or less, and more preferably 1 mm or less. Even if the thickness of the resin layer 5 is larger than 2 mm, no further improvement in insulation can be expected, and only cost is increased.

To form the resin layer 5, injection molding using the outer ring 1 or the inner ring 2 on which the resin layer 5 is to be formed as an insert component is simple and preferable. In addition, a spraying method (including thermal spraying), an electrostatic coating method (powder and liquid), a fluidized bed method, and the like can also be applied.

### (Formation of Black Surface)

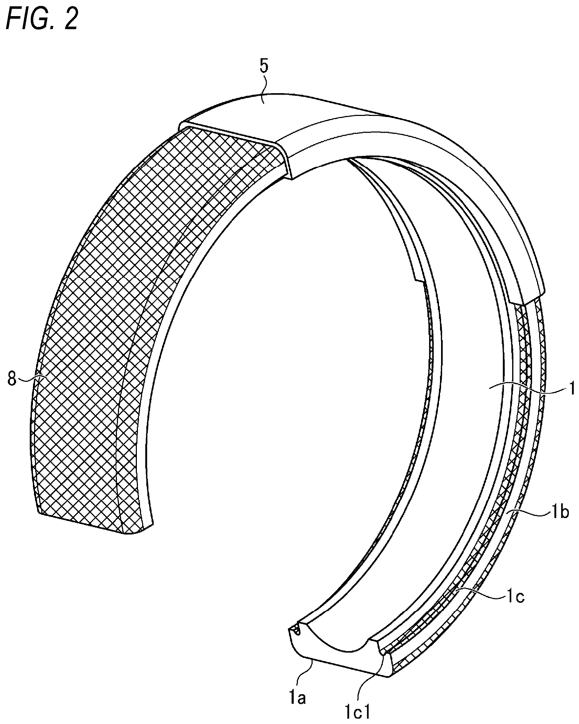

In the present invention, to prevent relative sliding between the outer ring 1 or the inner ring 2 and the resin layer 5, a black surface 8 is formed on a part of the outer ring 1 or the inner ring 2 which is in contact with the resin layer 5, specifically, on all or a part of the outer peripheral surface 1a, the two axial side surfaces 1b, and the inner peripheral surface 1c including the annular groove 1c1 for the outer ring 1, and on all or a part of the inner peripheral surface 2a, the two axial side surfaces 2b, and the outer peripheral surface 2c including the annular groove 2c1 for the inner ring 2. FIG. 2 is a partially cutaway perspective view illustrating an example in which a black surface is formed on the outer ring 1, and the black surface 8 is formed on the outer peripheral surface 1a and the annular groove 1c1 of the outer ring 1, and the resin layer 5 is formed on the black surface 8 by injection molding.

The black surface 8 is an oxide film on a steel material formed by heat treatment, and has an appearance in which the steel material is covered with a black surface. That is, the black surface 8 is an unprocessed surface that is not cut or ground after heat treatment. The black surface has pinholes and irregularities on the surface and is roughened. For this reason, since the black surface is formed on the part of the outer ring 1 or the inner ring 2 which is in contact with the resin layer 5, relative sliding between the two can be prevented.

### (Specifications on Circularity or Coaxiality)

The black surface 8 is formed by heat-treating the outer ring 1 or the inner ring 2, and this increases circularity or coaxiality of the outer ring 1 or the inner ring 2, which is geometric tolerance. Accordingly, a restraining force in the circumferential direction acts on the resin layer 5, and relative sliding can be prevented. Specifically, the circularity is preferably 30 µm or more, and the coaxiality is preferably 20 µm or more. However, rotation of the bearing would be affected as the circularity and the coaxiality increase, and thus the circularity is preferably 500 µm or less and the coaxiality is preferably 200 µm or less.

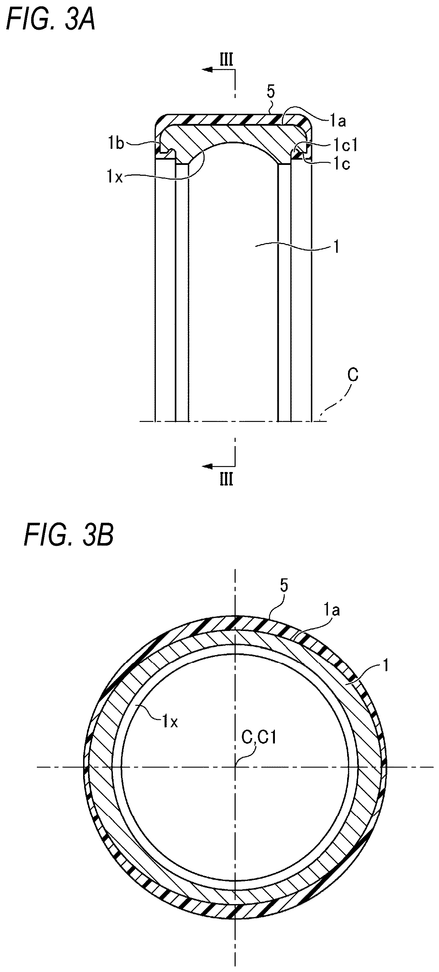

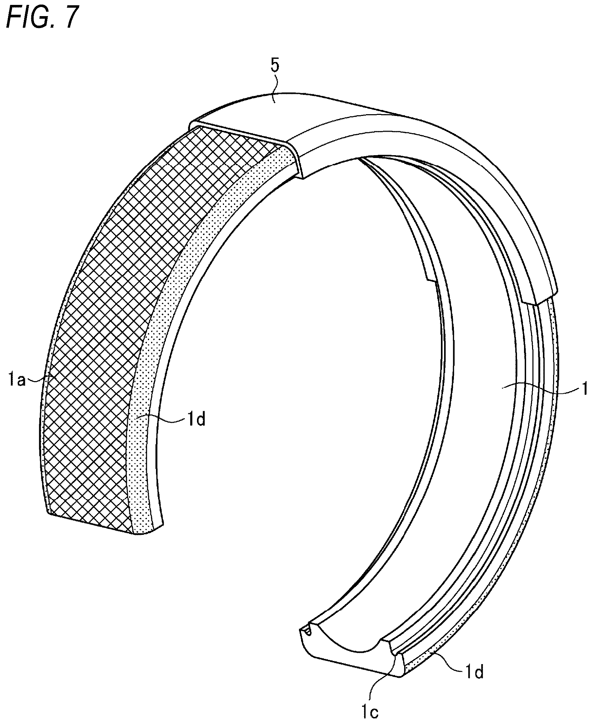

Hereinafter, embodiments of an insulated bearing in which the circularity or the coaxiality of the outer ring 1 or the inner ring 2 is specified by changing a shape of the outer ring 1 or the inner ring 2 will be described with reference to FIG. 3A to FIG. 10, and sizes of the circularity or the coaxiality of the outer ring 1, the inner ring 2, and the resin layer 5 are exaggerated to be visible in any of the drawings. FIG. 3A to FIG. 6B illustrate embodiments regarding circularity, and FIGS. 7 to 10 illustrate embodiments regarding coaxiality.

### Embodiment 2

FIGS. 3A and 3B illustrate an embodiment in which the resin layer 5 is formed on the outer peripheral surface 1a of the outer ring 1 having a large circularity, FIG. 3A is an axial cross-sectional view, and FIG. 3B is a cross-sectional view taken along a line III-III in FIG. 3A. As illustrated in FIG. 3B, the outer peripheral surface (contact surface with the resin layer 5) 1a of the outer ring 1 has a center C1 common to a center C of the bearing, and an outer diameter in a left-right direction is larger than an outer diameter in an upper-lower direction. When such a difference in diameter is circularity and is 30 µm or more, relative sliding can be effectively prevented. Accordingly, a thickness of the resin layer 5 is smaller in the left-right direction than in the upper-lower direction so that the outer diameter of the resin layer 5 is a perfect circle.

### Embodiment 3

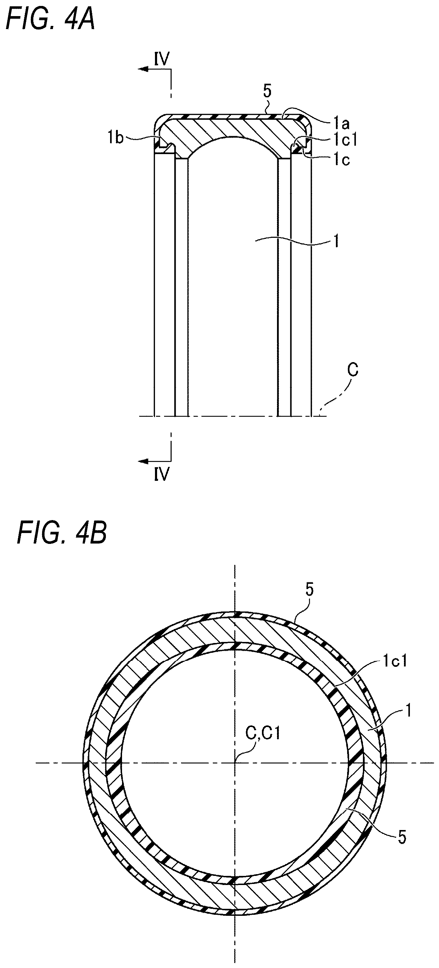

FIGS. 4A and 4B illustrate an embodiment in which the annular groove 1c1 of the outer ring 1 has a large circularity, FIG. 4A is an axial cross-sectional view, and FIG. 4B is a cross-sectional view taken along a line IV-IV in FIG. 4A. As illustrated in FIG. 4B, the center C1 of the annular groove (contact surface with the resin layer 5) 1c1 of the outer ring 1 is common to the center C of the bearing, and a groove depth of the annular groove 1c1 is larger in the left-right direction than in the upper-lower direction. Accordingly, the thickness of the resin layer 5 in the annular groove 1c1 in the left-right direction is larger than that in the upper-lower direction so that an inner diameter of the resin layer 5 is a perfect circle.

### Embodiment 4

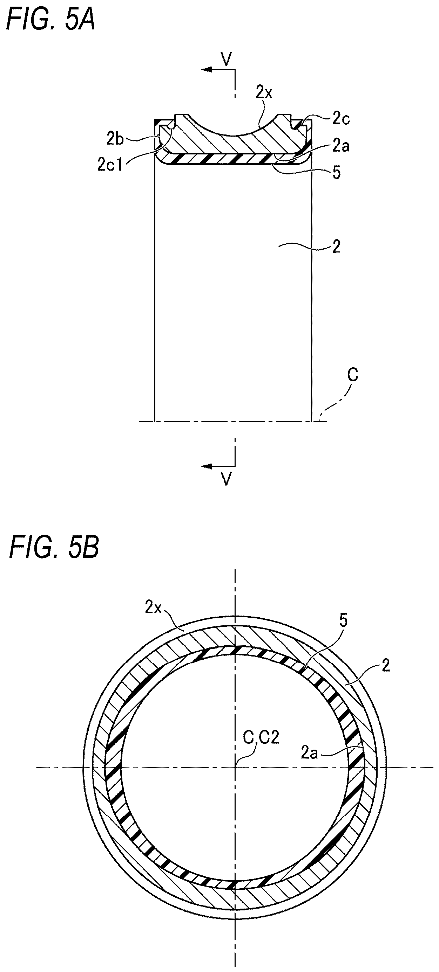

FIGS. 5A and 5B illustrate an embodiment in which the resin layer 5 is formed on the inner peripheral surface 2a of the inner ring 2 having a large circularity, FIG. 5A is an axial cross-sectional view, and FIG. 5B is a cross-sectional view taken along a line V-V in FIG. 5A. As illustrated in FIG. 5B, the inner peripheral surface (contact surface with the resin layer 5) 2a of the inner ring 2 has a center C2 common to the center C of the bearing, and an inner diameter in the upper-lower direction is smaller than an inner diameter in the left-right direction. Accordingly, the thickness of the resin layer 5 in the left-right direction is larger than that in the upper-lower direction so that the inner diameter of the resin layer 5 is a perfect circle.

### Embodiment 5

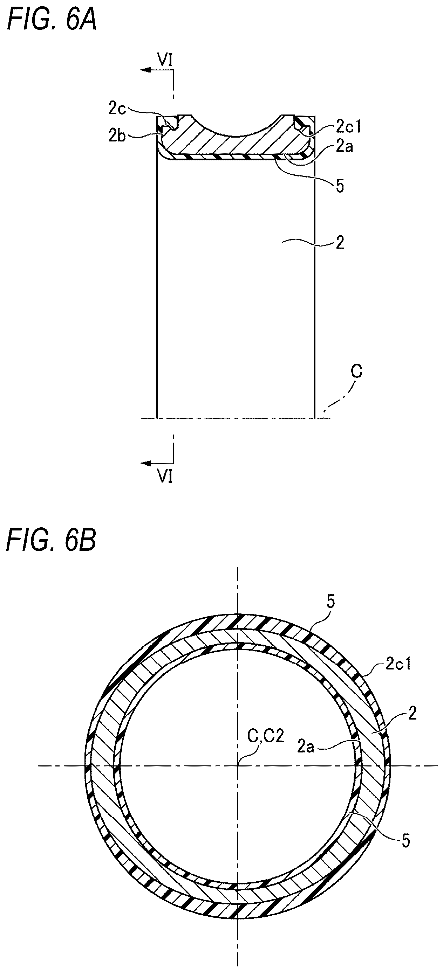

FIGS. 6A and 6B illustrate an embodiment in which the annular groove 2c1 of the inner ring 2 has a large circularity, FIG. 6A is an axial cross-sectional view, and FIG. 6B is a cross-sectional view taken along a line VI-VI in FIG. 6A. As illustrated in FIG. 6B, the center C2 of the annular groove (contact surface with the resin layer 5) 2c1 of the inner ring 2 is common to the center C of the bearing, and a groove depth of the annular groove 2c1 is larger in the upper-lower direction than in the left-right direction. Accordingly, the thickness of the resin layer 5 is smaller in the left-right direction than in the upper-lower direction so that the outer diameter of the resin layer 5 is a perfect circle.

### Embodiment 6

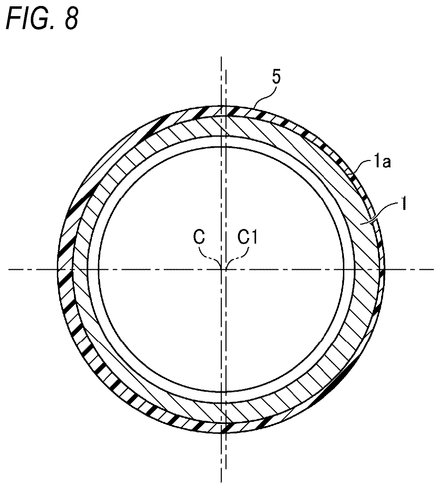

FIGS. 7 and 8 illustrate an embodiment in which the outer peripheral surface 1a of the outer ring 1 and a main chamfer 1d of the outer ring 1 having different coaxiality are contact surfaces with the resin layer 5, FIG. 7 is a partially cutaway perspective view, and FIG. 8 is a cross-sectional view at a boundary between the outer peripheral surface 1a and the main chamfer 1d of the outer ring 1. The main chamfer 1d is formed from the outer peripheral surface 1a to the axial side surface 1b of the outer ring 1. As illustrated in FIG. 8, a thickness of the outer peripheral surface 1a of the outer ring 1 gradually increases from a left side to a right side, and the center C1 of the outer peripheral surface 1a of the outer ring 1 is shifted to the right side relative to the center C of the bearing. Accordingly, the thickness of the resin layer 5 decreases from the left side to the right side so that the outer diameter of the resin layer 5 is a perfect circle.

As illustrated in FIG. 8, when a distance between the center C1 of the outer peripheral surface 1a of the outer ring 1 and the center C of the bearing is coaxiality and is 20 µm or more, relative sliding can be effectively prevented.

### Embodiment 7

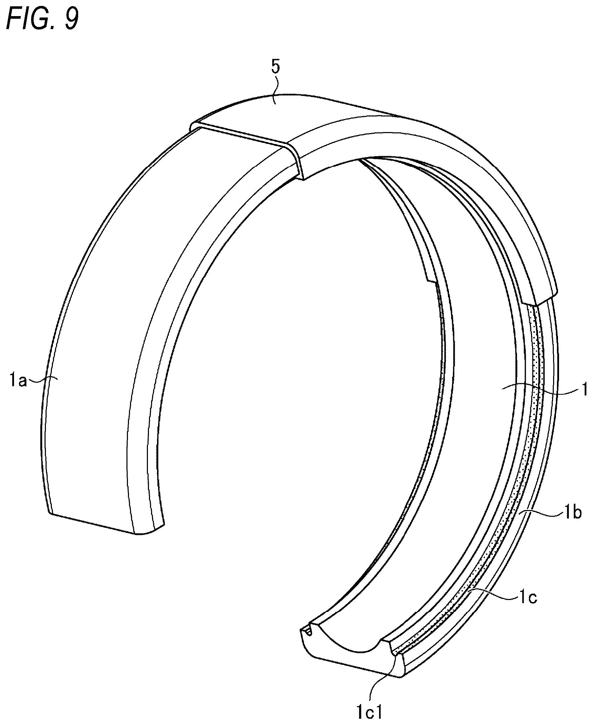

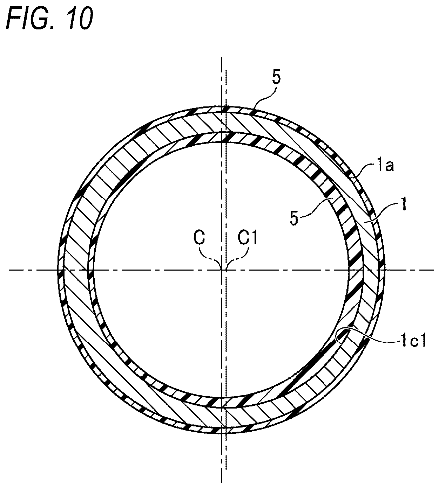

FIGS. 9 and 10 illustrate an embodiment in which the outer peripheral surface 1a of the outer ring 1 and the annular groove 1c of the outer ring 1 having different coaxiality are contact surfaces with the resin layer 5, FIG. 9 is a partially cutaway perspective view, and FIG. 10 is a cross-sectional view at a boundary between the outer peripheral surface 1a and the annular groove 1c of the outer ring 1. As illustrated in FIG. 10, a depth of the annular groove 1c of the outer ring 1 increases from the left side to the right side, and the center C1 of the annular groove 1c of the outer ring 1 is shifted to the right side relative to the center C of the bearing. Accordingly, the thickness of the resin layer 5 increases from the left side to the right side so that the inner diameter of the resin layer 5 is a perfect circle.

In Embodiments 6 and 7, among the outer peripheral surface 1a, the inner peripheral surface 1c, and the main chamfer 1d, two or more circumferential parts having different coaxiality may be formed. When shift directions are different from each other, relative sliding can be more effectively prevented.

That is, in Embodiments 2 to 7, the thickness of the resin layer formed on a bearing ring (outer ring or inner ring) having different circularity or coaxiality is adjusted over the circumferential direction so that a peripheral surface (inner peripheral surface or outer peripheral surface) radially opposite to a peripheral surface (outer circumferential surface or inner circumferential surface) of the resin layer which is in contact with the bearing ring has a perfect circular shape.

### Embodiment 8

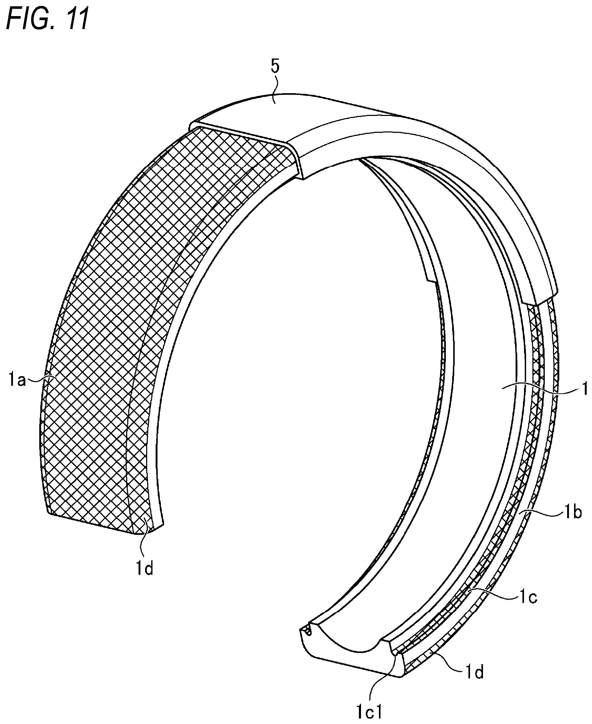

Although a case of forming the black surface 8 is described above, a part in contact with the resin layer 5 may be roughened instead of the black surface 8. FIG. 11 is a partially cutaway perspective view illustrating an example thereof, in which the outer peripheral surface 1a, the inner peripheral surface 1c including the annular groove 1c1, and the main chamfer 1d of the outer ring 1 are roughened. The resin layer 5 is formed on these roughened surfaces (1a, 1c, 1d). Due to an anchor effect of a rough surface, a restraining force acts in the circumferential direction of the outer ring 1.

Regarding a degree of a rough surface, when surface roughness is Ra 3.2 µm or more or Sa 3.2 µm or more in the circumferential direction of any of the surfaces (1a, 1c, 1d), relative sliding can be effectively prevented. Methods for roughening are not limited, and general methods such as machining, shot blasting, and chemical treatment can be used. For this reason, when both Ra and Sa are excessively large, a load required for surface roughening increases, and thus Ra and Sa are preferably 25.0 µm or less.

The present invention is not limited to the above embodiments, and can be appropriately modified, improved, and the like. Each embodiment and each modification described in the present description may be combined and applied within a practicable range.

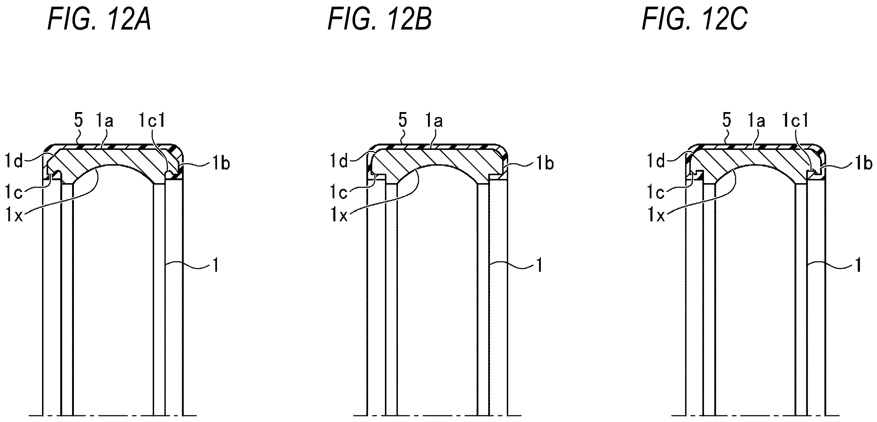

For example, a shape of the contact surface of the outer ring 1 with the resin layer 5 and a shape of the contact surface of the inner ring 2 with the resin layer 5 are not limited, and for example, the outer ring 1 can have cross-sectional shapes illustrated in FIG. 12A to FIG. 13B.

As illustrated in FIGS. 12A to 12C, the resin layer 5 is bent in a substantially L shape in cross section from a part covering the axial side surface 1b to cover the inner peripheral surface 1c of the outer ring 1, and the end portion of the resin layer 5 is fitted into the annular groove 1c1 in FIGS. 12A to 12C. A cross-sectional shape of the annular groove 1c1 is a droplet shape having an arc in FIG. 12A, and is a hook shape in FIG. 12C. As illustrated in FIG. 12B, the annular groove 1c1 may be omitted.

Further, the main chamfer 1d may have a linear shape as illustrated in FIG. 12A, and may have an arc shape as illustrated in FIGS. 12B and 12C.

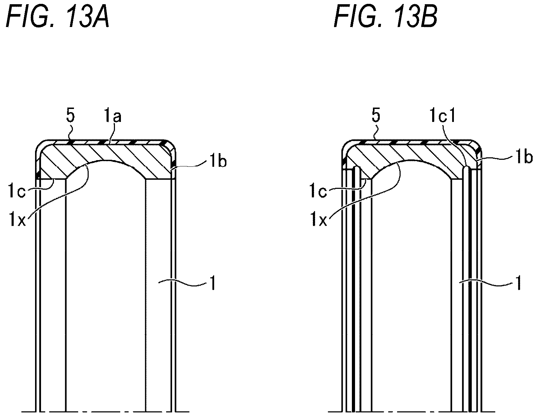

Alternatively, as illustrated in FIG. 13A, the resin layer 5 may be formed up to the inner diameter side end portion of the axial side surface 1b without the annular groove 1c1 of the outer ring 1.

As illustrated in FIG. 13B, the resin layer 5 may be formed up to the inner diameter side end portion of the axial direction side surface 1b without the end portion of the resin layer 5 reaching the annular groove 1c1. In this case, a seal member can be attached to the annular groove 1c1.

The present application is based on a Japanese patent application (JP2023-103604A) filed on June 23, 2023, contents of which are incorporated herein by reference.

### REFERENCE SIGNS LIST

1 outer ring
1a outer peripheral surface of outer ring
1b axial side surface of outer ring
1c1 annular groove of outer ring
1d main chamfer
1x raceway groove (raceway surface)
2 inner ring
2a inner peripheral surface of inner ring
2b axial side surface of inner ring
2c1 annular groove of inner ring
2x raceway groove (raceway surface)
3 ball (rolling element)
4 cage
5 resin layer
8 black surface
10 insulated bearing

## Claims

1. An insulated bearing comprising:
a pair of bearing rings having a pair of raceway surfaces;
a plurality of rolling elements rollably held between the pair of raceway surfaces; and
a cage rollably holding the rolling elements, wherein
a contact surface of one of the bearing rings with a mating member is coated with a resin layer, and
a black surface is formed on at least a part of a contact surface of the bearing ring, on which the resin layer is formed, with the resin layer.

2. The insulated bearing according to claim 1, wherein a circumferential part of at least the part of the contact surface of the bearing ring, on which the resin layer is formed, with the resin layer has circularity of30 µm or more.

3. The insulated bearing according to claim 1 or 2, wherein a circumferential part of at least two surfaces or more of the contact surface of the bearing ring, on which the resin layer is formed, with the resin layer has coaxiality of 20 µm or more.

4. An insulated bearing comprising:
a pair of bearing rings having a pair of raceway surfaces;
a plurality of rolling elements rollably held between the pair of raceway surfaces; and
a cage rollably holding the rolling elements, wherein
a contact surface of one of the bearing rings with a mating member is coated with a resin layer, and
at least a part of a contact surface of the bearing ring, on which the resin layer is formed, with the resin layer has a circumferential surface roughness of Ra 3.2 µm or more or Sa 3.2 µm or more.
